(19)

**Europäisches Patentamt**

**European Patent Office**

**Office européen des brevets**

(11) **EP 2 833 298 A1**

(12) **EUROPEAN PATENT APPLICATION**

(43) Date of publication:
**04.02.2015 Bulletin 2015/06**

(51) Int Cl.:
***G06N 5/00*** *(2006.01)*

(21) Application number: **13382308.8**

(22) Date of filing: **30.07.2013**

<table>
<tr>
<td>

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Universitat Pompeu Fabra**
**08002 Barcelona (ES)**

</td>
<td>

(72) Inventors:
• **Nettleton, David Francis**
**08034 Barcelona (ES)**
• **Jan Dries, Anton Madeleine**
**3010 Leuven (BE)**

(74) Representative: **Carvajal y Urquijo, Isabel et al**
**Clarke, Modet & Co.**
**Suero de Quiñones, 34-36**
**28002 Madrid (ES)**

</td>
</tr>
</table>

(54) **Local neighbourhood sub-graph matching method**

(57)    Local neighbourhood sub-graph matching method, comprising a modified isomorphism matcher for local neighbourhood sub-graphs, the matcher consisting in a distance metric with weighted characteristics in terms of sub-graph statistics and statistics of neighbour node degrees. The method comprises:
- a training process on a sample S from a graph G, to calibrate the weights of the metric, by using a simulated annealing process which uses as a fitness function the modified isomorphism matcher which takes into account how well the match maintains the neighbouring node degree distributions.
- executing the metric with the optimum weight vector on the complete graph G to find, for each local neighbourhood sub-graph of each node $g$ of the graph G, the most similar local neighbourhood sub-graph among all other nodes in the complete graph G.

Fig. 2

Printed by Jouve, 75001 PARIS (FR)

**Description**

*Field of the Invention*

The present invention is comprised within the field of sub-graph matching.

*Background of the Invention*

The matching of sub-graphs is a key task for graph mining which however may have a high computational cost for large graphs. Different solutions to this problem exist in the literature. On the one hand we have the exact/exhaustive one to one mapping of labelled nodes exemplified by isomorphism matchers. Different optimizations exist in order to reduce the computational cost, such as compressed matrix representations of the graph structure. On the other hand we have approximate matchers which relax the requirement for a total matching, especially in terms of edge connectivity. The need for an exact isomorphic matching is also application and domain dependent. Applications such as molecular discovery and chemical analysis require exact isomorphic matching. In the case of the analysis of online social networks represented as graphs, often a good approximation is sufficient for many matching operations and exhaustive mapping is unnecessary. Example applications for an online social network would be user profiling, classification and clustering, network analysis and behaviour analysis.

Regarding the first method, exact matching, a key property of interest in graphs is the isomorphic property, which refers to an exact match between two given graphs, in terms of structure, dimensionality, connectivity and mapping of corresponding nodes. Two graphs G1 = (V, E1), G2 = (V, E2) are designated as being isomorphic if a permutation p exists such that p(G1) = G2. That is, with the same set of vertices, the edges of G1 can be rearranged to fit G2.

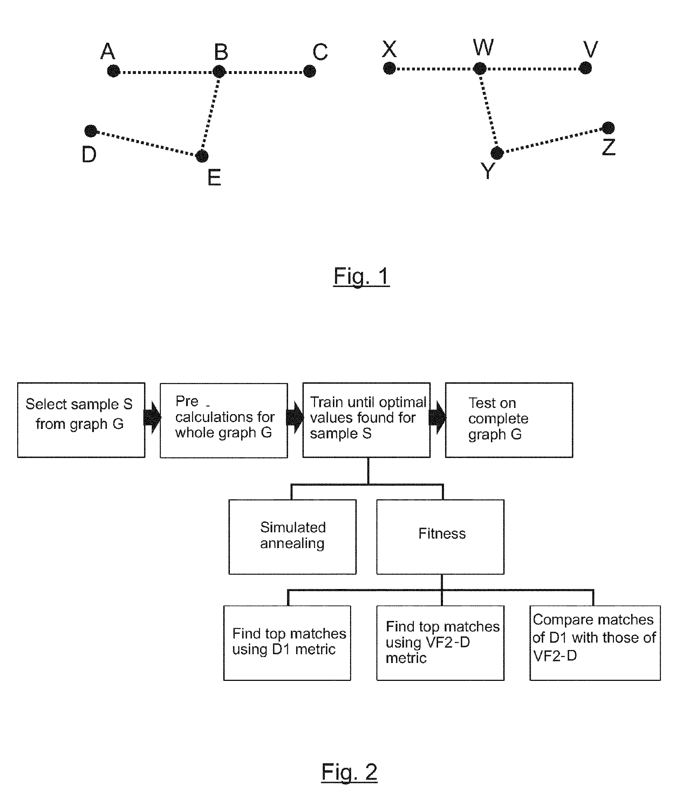

In Figure 1 two example graphs are represented, one of which is an isomorphism of the other, by the permutation {(A, V), (B, W), (C, X), (D, Z), (E, Y)}.

Graph matching is a key activity in different pattern recognition applications, in which high and low level information may be represented. However, graph matching has a high computational cost, and the task of finding isomorphic sub-graphs is a problem which is NP-complete. Two graphs which are isomorphic not only have the same topological structure but also have a one to one mapping of all their corresponding labelled nodes.

Exact matching: two key references for isomorphic matchers are Naughty [1] and VF2 [2]. Naughty and VF2 are considered two of the fastest ismorphism matchers in the literature. Naughty [1] uses group theory concepts in order to efficiently construct the automorphism group of each of the input graphs, from which a canonical labeling is derived. This obtains a node ordering that is uniquely defined for each equivalence class of isomorphic graphs, such that two graphs can be isomorphically matched by a relatively simple verification of the equality of the adjacency matrices of their canonical forms. The equality verification has $O(N^2)$ time, however the preprocessing of the canonical labeling can require an exponential time in the worst case. VF2 [2], on the other hand, is based on converting the graph into a tree structure and then performing a depth-first search, using a set of rules to efficiently prune the search tree. It uses data structures which have been adapted in order to further reduce the computational cost of matching. VF2 has subsequently become widely used in the graph mining community.

Approximate matching: Regarding the second approach, approximate matching, two key techniques are the 'graph edit distance'[3] and 'spectral' methods[4]. The graph edit distance method [3] calculates the number of changes required in order to convert one graph into another. The operators used to change the graph can be, for example, add edge, delete edge, add node, delete node, and so on. Spectral methods [4], on the other hand are based on the observation that the Eigenvalues and the Eigenvectors of the adjacency matrix of a graph are invariant with respect to node permutations. Therefore, if two graphs are isomorphic, their adjacency matrices will have the same Eigenvalues and Eigenvectors. Finally we can cite more recent applications such as DeltaCon [5] and Tale [6] which use graph characteristics and stochastic methods in order to perform approximate matching of sub-graphs.

The present invention proposes a new approximate sub-graph matching method with the advantage of a relatively simple to implement matching method, requiring a worst case runtime computational cost of $O(N^2)$.

**REFERENCES**

[1] B. D. McKay, Practical graph isomorphism, Congressus Numerantium 30 (1981) 45-87.

[2] L. P. Cordella , P. Foggia C. Sansone, M.Vento, An Improved Algorithm for Matching Large Graphs, in Proc. 3rd IAPR-TC-15 International Workshop on Graph based Representations, Cuen, Italy, 2001, pp. 149-159.

[3] H. Bunke, Error correcting graph matching: on the influence of the underlying cost function, IEEE Trans. Patt. Anal. Mach. Intell. 21 (1999) 917{922.

[4] S. Umeyama, An eigendecomposition approach to weighted graph matching problems, IEEE Trans. Patt. Anal. Mach. Intell. 10 (1988) 695{703.

[5] DeltaCon: a principled massive-graph similarity function. Dania Koutra, Joshua T. Vogelstein, Christos Faloutsos, SDM 2013, Austin, Texas, May 2013.

[6] TALE: A Tool for Approximate Large Graph Matching. Yuanyuan Tian, Jignesh M. Patel. ICDE '08 Proceedings of the 2008 IEEE 24th International Conference on Data Engineering, Pages 963-972, IEEE Computer Society Washington, DC, USA (2008).

[7] J. Leskovec, J. Kleinberg and C. Faloutsos. Graph Evolution: Densification and Shrinking Diameters". ACM Transactions on Knowledge Discovery from Data (ACM TKDD), 1(1), 2007.

[8] J. Shetty and J. Adibi, "Discovering Important Nodes through Graph Entropy - The Case of Enron Email Database", KDD '2005, Chicago, Illinois, 2005.

[9] J. Leskovec, D. Huttenlocher, J. Kleinberg. "Signed Networks in Social Media". CHI '10 Proc. 28th Int. Conf. on Human Factors in Computing Systems, pp. 1361-1370, ACM, NY, USA 2010.

[10] B.D. McKay, Practical graph isomorphism, Congressus Numerantium 30 (1981) 45-87.

## _Description of the Invention_

The present invention refers to a similarity metric which approximates a modified isomorphism matcher for local neighbourhood sub-graphs, the matcher consisting in a distance metric with weighted characteristics in terms of sub-graph statistics and statistics of neighbour node degrees. The weights of the metric are calibrated using a simulated annealing process which uses as a fitness function a modified isomorphism matcher which takes into account how well the match maintains the neighbouring node degree distributions. The learned weights provide additional information useful to interpret the relative importance of each characteristic.

A hybrid matching approach is herewith proposed, which captures a good approximate model of the isomorphism matcher, based on key graph characteristics and a corresponding weighting scheme for each characteristic. The runtime computational cost is reduced because the calculations required for the graph characteristics (statistical metrics such as degree, clustering coefficient, number of edges, degrees of neighbours) are not NP-hard and can be pre-calculated, and the distance metric simply calculates the difference between the respective characteristics of each graph. However, the principal overhead is the training of the weights, for which it is herewith used a simulated annealing as a pre-process and the VF2 isomorphism matcher as the fitness function. The computational cost of the training is reduced by sampling. The VF2 isomorphism matcher has been modified so that it not only returns a boolean true/false value indicating two sub-graphs are isomorphisms or not, but also returns a quantified value of how well the respective neighbourhood nodes maintain their degree values. Therefore the fitness function not only indicates which neighbourhood sub-graphs are isomorphisms for two given target nodes, but also indicates which of those isomorphic sub-graphs has the closest fit with respect to the degree values of the neighbourhood nodes. This provides a meaningful numerical value for the fitness function. Matches which are not isomorphisms are discounted.

Thus, the present invention presents an approximate distance metric whose objective is to model the isomorphism matcher, but with a much lower runtime computational cost.

The metric calculates a distance based on five statistical values of the sub-graph. The metric subtracts the corresponding values of five graph statistics for each sub-graph to calculate the distance.

## _Brief Description of the Drawings_

A series of drawings which aid in better understanding the invention and which are expressly related with an embodiment of said invention, presented as a non-limiting example thereof, are very briefly described below.

**Figure 1** shows a graph isomorphism according to the state of the art, wherein both graphs are considered isomorphic if an adequate mapping can be defined between both graphs.

**Figure 2** shows a schematic representation of the complete process of the invention.

**Figure 3** shows an example of what we understand for a local neighbourhood subgraph around a given target node $N_0$.

**Figure 4** shows an example of four different target nodes, $N_{10}$, $N_{20}$, $N_{30}$, $N_{40}$, and their respective local neighbourhood sub-graphs.

**Figure 5** shows the example calculations of distance D1 to the four graphs shown in **Figure 4.**

**Figure 6** shows an example of the calculations of the distance VF2-D to the three isomorphic graphs shown in **Figure 4.**

**Figure 7** shows an example for learning to rank, according to the present invention, in which metric D1 (on the right) learns to rank from the ranking generated by metric VF2-D (on the left).

**Figure 8** shows a summary of graph statistics for three test datasets.

**Figure 9** shows a summary of training results: calibrated weights vs. weights set to 1.

**Figure 10** shows values of calibrated weights.

**Figures 11A, 11B** and **11C** show data corresponding to the calibration (training phase), runtime (test phase) and computational cost (elapsed execution time), respectively.

_Description of a Preferred Embodiment of the Invention_

The present invention proposes a 'local neighbourhood sub-graph' matcher which finds good approximations and which has a low runtime computational cost relative to state of the art exhaustive isomorphic matching algorithms. The matcher is based on a metric, herewith designated as "D1", which calculates a 'distance' between two sub-graphs. The 'D1' metric is defined in terms of a set of descriptive statistical characteristics each of which has a corresponding weight to ponder its contribution to the overall distance result. The weights are optimized for each dataset by an optimization process which uses the simulated annealing technique. The fitness function used for the optimization technique matches the result obtained by the 'D1' metric against the 'ideal' result obtained by a state of the art isomorphism matcher, designated as VF2. VF2 returns a Boolean value indicating if two graphs are isomorphic. VF2 has been modified, herewith designated as VF2-D, so that it also returns a score of how well the respective neighbourhood nodes maintain their degree values. The present invention introduces novel metrics used for similarity based selection of sub-graphs and their immediate neighbourhoods. The novel similarity based metrics for matching local neighbourhood sub-graphs consists in a weighted distance metric based on five topological characteristics of the sub-graphs and a matcher based on a unique quantified value for each sub-graph.

It is important to point out that although in the preferred embodiment the selected matcher algorithm to obtain the isomorphisms is the VF2 algorithm, due to its high efficiency, other isomorphism matcher algorithms may be employed, such as nauty [10].

VF2-D, the new version of the isomorphism matcher algorithm, serves two purposes: to do the benchmarking of the precision of the similarity based metric and to train the weights for the distance based metric.

In respect with the distance metric, different methods have been used for identifying similar sub-graphs. On the one hand, sub-graphs can be compared for being isomorphic, and on the other hand they can be compared using other more straightforward similarity distance metrics. The choice of approach depends on the domain application under study, simplicity reasons or computational cost motivations.

In **Figure 2** a schematic representation is shown of the complete process. A total of 10 randomly selected samples were taken of 100 nodes each in order to calculate the average precision values.

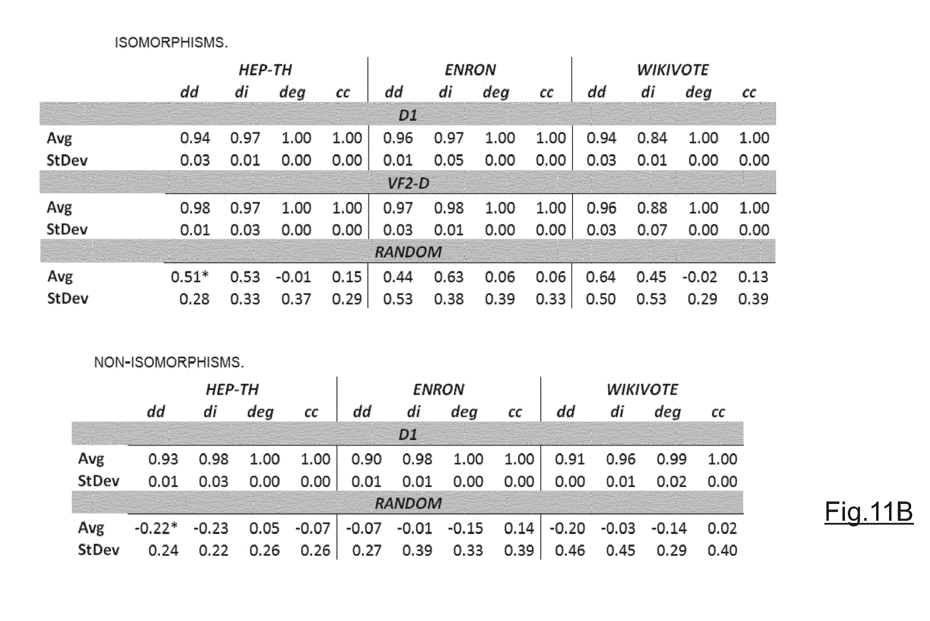

We note that, for each sample selected from the graph, we only include the target nodes whose sub-graphs have at least one isomorphism in the complete graph. However, when we execute the test phase, the D1 metric processes sub-graphs with and also without isomorphisms. A good precision is obtained in both cases (as can be seen in Figure 11B).

The following pseudo-code shows a more detailed version of the individual processes:

PROCEDURE **PreCalculations**(graph $G$, sample nodes $S$)

    FOR EACH (n) $\epsilon$ ($G$)

        Define $SG_n$ as the local neighbourhood sub-graph for n

        For $SG_n$ calculate the following statistics: degree of target node, clustering coefficient, number of edges, average of degrees of neighbours of target node, standard deviation of degrees of target node.

    END FOREACH

    FOR EACH (s) $\epsilon$ ($S$)

        Define $SG_s$ as the local neighbourhood sub-graph for s

        Assign to s the nodes in the complete graph $G$ whose local neighbourhood sub-graphs $SG_i$ are isomorphisms of $SG_s$

    END FOREACH

END PROCEDURE

PROCEDURE **Train**(graph $G$, sample nodes $S$)

    WHILE OPTIMUM FITNESS NOT FOUND

        Run simulated annealing

        Weights assigned by simulated annealing

        Execute **fitness function** with weights assigned by simulated annealing,

```
                for samples nodes S on graph G
            Simulated annealing evaluates if fitness is optimum
        END WHILE
        RETURN optimum weight assignments
    END PROCEDURE


    PROCEDURE Fitness(graph G, sample nodes S)
        FOR EACH (s) ϵ (S)
            Define SG_s as the local neighbourhood sub-graph for s
            Find top 10 sub-graphs D_{10}, corresponding to nodes g in G whose D1
                distance is closest to that of SG_s.
            Find top z (up to max of 10) sub-graphs I_z corresponding to nodes g in G
            whose VF2-D distance is closest to that of SG_s.
            Calculate fitness for s by comparing list D_{10} with list I_z.
        END FOREACH
        RETURN average fitness for sample S
    END PROCEDURE


    PROCEDURE Test(graph G)
        FOR EACH (g) ϵ (G)
            Define SG_g as the local neighbourhood sub-graph for g
            Find top sub-graph SG_{g'}, corresponding to node g' in G whose D1
                distance is closest to that of SG_g.
            Calculate precision statistics for SG_g with respect to SG_{g'}.
        END FOREACH
        RETURN average precision statistics for graph G
    END PROCEDURE
```

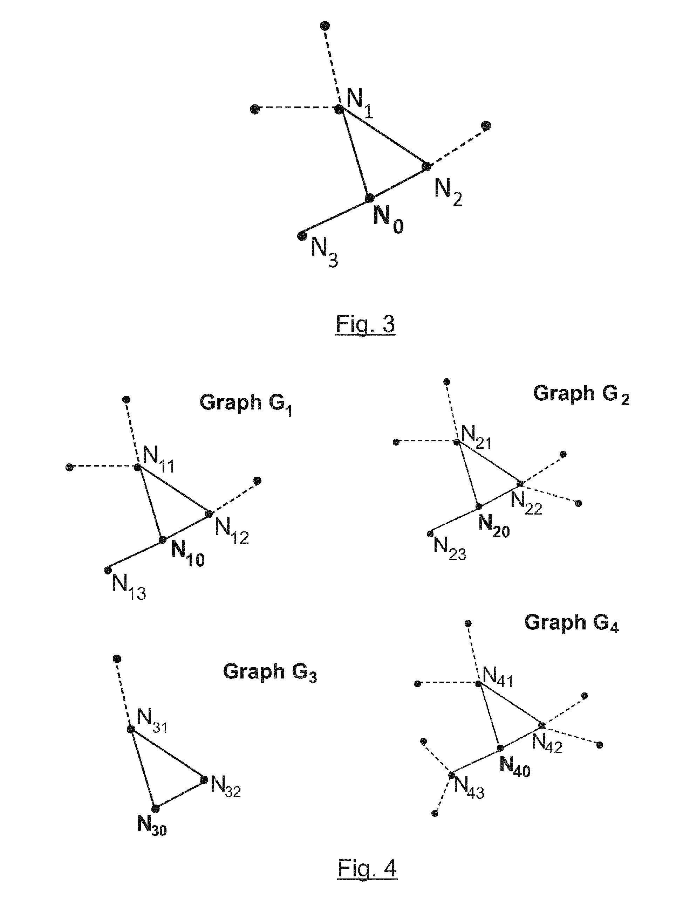

In order to clearly define what we understand as a 'local neighbourhood sub-graph, we will refer to **Figure 3**. In **Figure 3** we see the target node $N_0$ which has three immediate (one hop neighbours) designated as $N_1$ $N_2$ and $N_3$. Neighbour $N_1$ has a degree of four, comprised of two neighbours which are internal to the sub-graph and two neighbours which are external to the sub-graph. We note that the external neighbours do not form part of the local neighbourhood sub-graph and are only considered in order to calculate the degree of the neighbour nodes of $N_0$. The internal and external degrees of neighbours $N_2$ and $N_3$ are defined in a similar manner. Hence, a local neighbourhood sub-graph around a given target node is defined as being comprised of the immediate neighbouring nodes of said target node and their interconnections (links) between each other within the sub-graph and with the target node.

The objective of identifying similar local neighbourhood sub-graphs can have different motivations. For instance, it may form part of a data mining process on an online social network dataset represented as a graph. Each sub-graph is considered as the one hop neighbourhood around a given node which is the target node. Hence, it is desirable to identify node pairs which are as similar as possible, in terms of a given set of descriptive characteristics.

In order to calculate the similarity between two sub-graph neighbourhoods, computation cost is a key consideration. Hence, it is herewith employed a similarity metric which calculates a distance based on sub-graph characteristics which can be pre-calculated. The sub-graph characteristics are:

- degree of the target node $D_T$;
- number of edges in the sub-graph $N_E$,
- clustering coefficient CC,
- normalized average degree of adjacent nodes $AD_{AN}$, and
- normalized standard deviation of degree of adjacent nodes $SD_{AN}$.

The first three characteristics are designed to reflect the internal structure of the subgraph, whereas the last two characteristics reflect a key characteristic of the neighbours (their degree), which effectively considers the neighbourhood one hop further out (with the target node as starting point). In order to perform the calculation, all values are normalized against the maximum and minimum corresponding values in the complete graph.

We designate the immediate (one hop) neighbourhood graphs of two target nodes $N_{10}$ and $N_{20}$, as sub-graphs $G_1$ and $G_2$, respectively. Then, the distance metric, which will be designated as D1, will be as follows:

$$D1(G_1, G_2) = \begin{aligned} &\Delta(D_T(G_1), D_T(G_2)) \times \alpha\ + \\ &\Delta(N_E(G_1), N_E(G_2)) \times \beta\ + \\ &\Delta(CC(G_1), CC(G_2)) \times \chi\ + \\ &\Delta(AD_{AN}(G_1), AD_{AN}(G_2)) \times \delta + \\ &\Delta(SD_{AN}(G_1), SD_{AN}(G_2)) \times \varepsilon \end{aligned} \qquad (1)$$

The weight vector $\{\alpha, \beta, \chi, \delta, \varepsilon\}$ is then trained using a simulated annealing and the distance between the VF2-D algorithm score for each sub-graph as the target (optimum) value.

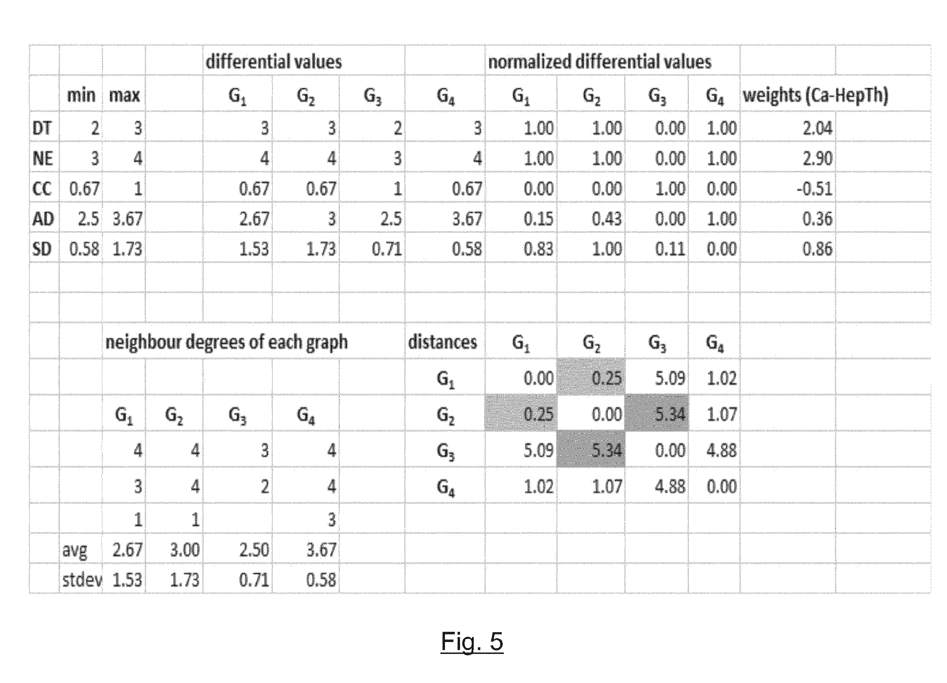

In order to clearly define what we understand as the comparison of 'local neighbourhood sub-graphs', we will refer to **Figure 4**. In **Figure 4** we see four sub-graphs, designated as $G_1$, $G_2$, $G_3$ and $G_4$, with respective target nodes $N_{10}$, $N_{20}$, $N_{30}$, and $N_{40}$. The sub-graphs are defined in a similar manner to that which we have previously explained with reference to **Figure 3**. Now consider that we wish to establish, for sub-graph $G_1$, which is the most similar of the other three sub-graphs, $G_2$, $G_3$ or $G_4$. We will use the distance metric defined in equation (1). First we need to calculate, for each graph, the five graph statistics used in equation (1), and normalize their values. In **Figure 5** we see the summary table of the calculated statistics for each graph. With reference to **Figures 4** and **5,** we will now describe the steps necessary in order to calculate the distance (equation 1) between the graphs $G_1$, $G_2$, $G_3$ and $G_4$:

- In the four columns labelled as 'differential values' we have calculated, for each graph $G_1$, $G_2$, $G_3$ and $G_4$, the values of $D_T$, $N_E$, CC, $AD_{AN}$ and $SD_{AN}$ of equation (1). For example, in the case of graph $G_1$, $D_T$ (degree of target node) is equal to 3, $N_E$ (number of edges in sub-graph) is equal to 4, CC the clustering coefficient of the sub-graph is equal to 0.67, $AD_{AN}$ (average degree of adjacent/neighbour nodes of the target node) is equal to 2.67, and $SD_{AN}$ (standard deviation of adjacent (neighbour nodes of the target node) is equal to 1.53. The values for graphs $G_2$, $G_3$ and $G_4$ are calculated in a similar manner.
- In the lower left table of **Figure 5,** labelled 'neighbour degrees of each graph', we see the calculations of the average and standard deviation of the neighbour degrees of each graph, which are used in equation (1).
- Next we calculate the maximum and minimum values for each of the five statistics and for the three sub-graphs (for the whole graph the max and min values would be calculated and based on all possible sub-graphs). On the left, the columns labelled 'min' and 'max' show the corresponding values. For example, in the case of $D_T$ (degree of target node), the min value is 2 and the max value is 3 (for graphs $G_1$, $G_2$, $G_3$ and $G_4$).
- The next step is to normalize the differential values using the max and min we have just calculated in the previous step. The standard normalization formula is used: normalized value = (value-min) / (max-min). The corresponding normalized values are shown in the three columns to the right labelled as 'normalized differential values'.
- Now we take the weights we have previously learned using the simulated annealing routine and the VF2-D fitness function. For this example we will use the weights learned from the Ca-HepTh graph dataset, given that it contains a larger number of relatively smaller sub-graphs which are similar to the examples. The five weights corresponding to each descriptive variables ($D_T$, $N_E$, CC, $AD_{AN}$ and $SD_{AN}$) are shown to the right of **Figure 5** in the column labelled as 'weights (Ca-HepTh).

- In the last step we apply equation (1), using the respective normalized values for each graph and the weights, to calculate the distance between each graph pair. The distance matrix is shown in the lower right part of **Figure 5.** We observe from the distance matrix that graphs $G_1$ and $G_2$ are the most similar (closest) with a distance of 0.25, whereas graphs $G_2$ and $G_3$ are the least similar (farthest apart) with a distance of 5.34.

In order to capture isomorphic characteristics, in a pre-processing step the weights of the distance metric (there is one weight for each characteristic) are trained using simulated annealing and a special isomorphism matcher to calculate the target value. For this purpose, the VF2 isomorphism matcher has been adapted, so that it also returns a score of how well the respective neighbourhood nodes maintain their degree values. This matcher is herewith called VF2-D.

In the training phase, in order to establish the fitness for a given match, for each sample node the best VF2-D values for all its isomorphisms are first pre-calculated. The modified VF2 matcher is used, which first identifies an isomorphism for a given node's neighbourhood and then calculates how well the respective neighbourhood nodes maintain their degree values.

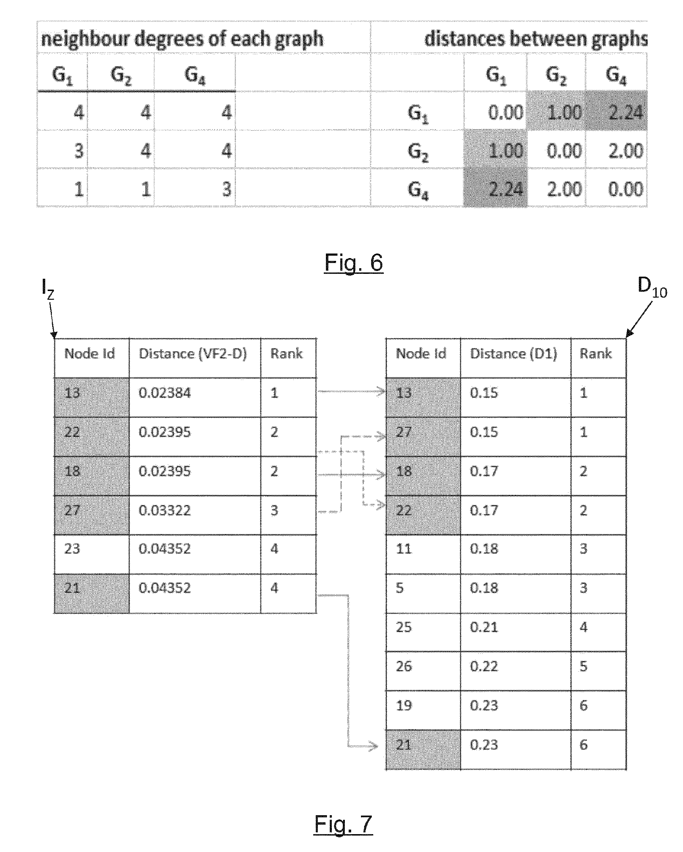

Now in order to explain how the fitness function VF2-D works, we will make reference again to **Figure 4** and also to **Figure 6.** Consider graph $G_1$ which consists of a target node $N_{10}$ that has three neighbours, $N_{11}$, $N_{12}$ and $N_{13}$, and a second graph $G_2$ which consists of a target node $N_{20}$ that has three neighbours, $N_{21}$, $N_{22}$ and $N_{23}$. We understand that there is a mapping of node $N_{11}$ with $N_{21}$, node $N_{12}$ with $N_{22}$, and node $N_{13}$ with $N_{23}$. Then, VF2-D will return the local neighbourhood sub-graph of target node $N_{10}$ as an isomorphism of the local neighbourhood sub-graph of node $N_{20}$, and will then calculate a numerical value for them. The difference between the degrees of the neighbours for graphs $G_1$ and $G_2$ is calculated as:

$$\sqrt{\sum_{i=1}^{k} (DN_{1i} - DN_{2i})^2} \quad (2)$$

where $k$ are the number of nodes of the local neighbourhood sub-graph of target node $N_{10}$; $DN_{1i}$ is the degree of node $i$ of the local neighbourhood sub-graph $G_1$ of target node $N_{10}$; and $DN_{2i}$ is the degree of node $i$ of the local neighbourhood sub-graph $G_2$ of target node $N_{20}$, both sub-graphs being isomorphisms.

Now consider that graph $G_1$ has target node $N_{10}$ with three neighbours, $N_{11}$, $N_{12}$ and $N_{13}$, of degrees 4, 3 and 1, respectively. Then consider graphs $G_2$ and $G_4$ with respective target nodes $N_{20}$ and $N_{40}$ whose immediate neighbourhoods are isomorphisms of the immediate neighbourhood of target node $N_{10}$. Node $N_{20}$'s neighbours, $N_{21}$, $N_{22}$ and $N_{23}$, have degrees 4, 4 and 1 and node $N_{40}$'s neighbours, $N_{41}$, $N_{42}$ and $N_{43}$, have degrees 4, 4, 3, respectively. We understand that there is a mapping of node $N_{11}$ with $N_{21}$ and $N_{41}$, node $N_{12}$ with $N_{22}$ and $N_{42}$, and node $N_{13}$ with $N_{23}$ and $N_{43}$.

Hence, using equation 2, the difference between the neighbours degrees of nodes $N_{10}$ and $N_{20}$ will be $\sqrt{(4 - 4)^2 + (3 - 4)^2 + (1 - 1)^2} = 1.00$. Likewise, the difference between the neighbours degrees of nodes $N_{10}$ and $N_{40}$ will be $\sqrt{(4 - 4)^2 + (3 - 4)^2 + (1 - 3)^2} = 2.24$. These results can be seen in **Figure 6**.

We note that graphs to be compared are first checked to be isomorphisms of each other, using VF2. Hence, VF2-D does not consider graph $G_3$ to be compared with graphs $G_1$, $G_2$ and $G_4$, given that graph $G_3$ is not an isomorphism of graphs $G_1$, $G_2$ or $G_4$.

Thus the node whose neighbourhood is an isomorphism of the neighbourhood of node $N_{10}$, and which is also closest in terms of the degrees of its corresponding neighbours, is node $N_{20}$.

Now, with reference to **Figure 7**, we will explain how the result calculated by VF2-D is used to rank the results of the metric D1 in order to obtain a fitness function for D1.

For each sample node, the top 10 nodes with the smallest distances using equation (1) are obtained. This list of nodes will be called $D_{10}$ (in a preferred embodiment we select 10 nodes, although this list may have a different number of nodes). Then, the same is done but using the VF2-D measure of equation (2), obtaining list $I_Z$. In the case of the VF2-D measure, it is possible that there are less than 10 isomorphisms, or none at all. Hence, only nodes which have at least one isomorphism are included, and for those we look for the node ids of the isomorphisms returned (list $I_Z$) in list $D_{10}$.

A key aspect we take into consideration is the relative ranking of the nodes in the respective lists. We observe that the nodes in list $D_{10}$ are in ascending order of distance, with the smallest distance (closest node) at the top of the list. Likewise, the nodes in list $I_Z$ are in ascending order of (VF2-D) distance, with the smallest distance (closest node) at the top of the list.

Hence, if node $N_1$ is ranked 2nd in list $I_Z$ and 3rd in list $D_{10}$, then the difference in relative ranking between the two lists will be 1. We repeat this for all the nodes in $I_Z$ and sum the differences as $S_{diff}$. We then calculate what would be the minimum distance if all the nodes in list $I_Z$ were in the same ranked positions in list $D_{10}$ and call this $S_{max}$. Finally, we subtract $S_{diff}$ from $S_{max}$ to obtain the fitness for a given node.

List $I_Z$ represents a standard against which we compare list $D_{10}$, which is produced by the distance metric (1) using the weight vector.

**Figure 7** shows an example of lists $I_Z$ (on the left) and $D_{10}$ (on the right). In list $I_Z$ the node ids and corresponding rankings are shown: $I_Z$ = {(13,1), (22,2), (18,2), (27,3), (23,4), (21,4)}. Likewise, for the list $D_{10}$, the nodes ids and corresponding rankings are: {(13,1), (27,1), (18,2), (22,2), (11,3), (5,3), (25,4), (26,5), (19,6), (21,6)}. We observe that for the given target node, only six isomorphisms (list $I_Z$) have been found, where as

in the D1 distance list ($D_{10}$) there are always 10 nodes, assuming there are at least 10 nodes in the complete graph, because the distance D1 is calculated for all nodes, whether they are isomorphisms or not. In list $I_Z$ we see that nodes with ids 22 and 18 are both ranked in position 2. This is because their corresponding difference values were identical.

The fitness function for each node in list $I_Z$ with respect to list $D_{10}$ may be, for example, the following formula:

$$\left( \frac{number\_of\_isomorphisms\_in\_IZ}{ranking\_in\_IZ} \right) \Big/ \left( \| ranking\_in\_IZ - ranking\_in\_D10 \| + 1 \right)$$

$$(3)$$

Hence, for the two lists shown in **Figure 7** we have: {( (6/1)/(|1-1|+1) ), ( (6/2)/(|2-2|+1) ), ( (6/2)/(|2-2|+1) ),( (6/3)/(|3-1|+1) ), ( (6/4)/(|4-6|+1) )}. We note that node id 23 of list $I_Z$ does not appear in list $D_{10}$ and, hence, it is not included in the calculation. If we sum the values for the five nodes, this gives 13.167.

Next we calculate what would be the maximum value if all the nodes in list $I_Z$ were found in list $D_{10}$ and with the same rank positions. This would give: {( (6/1)/(|1-1|+1) ), ( (6/2)/(|2-2|+1) ), ( (6/2)/(|2-2|+1) ),( (6/3)/(|3-3|+1) ),( (6/4)/(|4-4|+1) ), ( (6/4)/(|4-4|+1) )}. The sum of the values for the six nodes would give 17.0.

Hence, the fitness for the target node whose lists of most similar nodes are $I_Z$ and $D_{10}$, would be the maximum possible value minus the calculated value, that is, 17.0 - 13.167 = 3.833, which is the fitness. We note that a fitness of zero would imply a perfect fit of the model represented by equation (1) to the model represented by equation (2).

A weight optimization process is now carried out. To that end, we use a simulated annealing process to find the best weights for the weight vector of equation (1), using the fitness function of equation (2). We learn a separate weight vector for each test dataset (Hep-Th [7], Enron [8] and Wikivote [9] datasets) given their distinct statistical and topological characteristics.

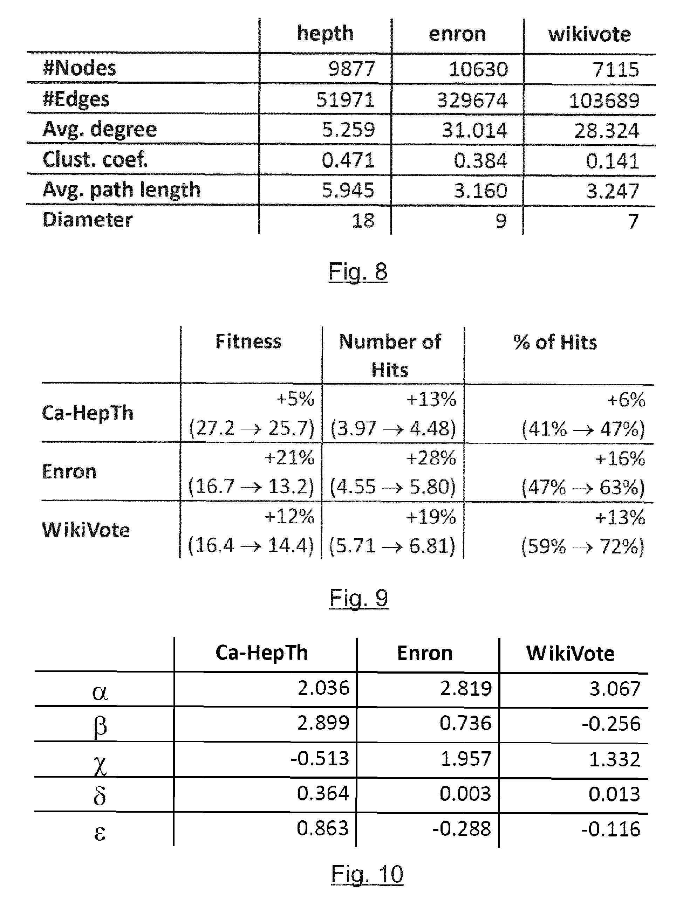

For each dataset, we randomly sample 100 nodes (train) and optimize the weights against the complete dataset. Each sample node neighbourhood must have at least 1 isomorphism in the complete graph. We repeat this process 10 times and then average the weights for the 10 runs. Then, in order to benchmark (see Fig. 9), we test using two sets of weights: (i) the optimum ones learnt in the training phase and (ii) all weights set to 1. We again run 10 tests of 100 sampled nodes for each dataset, calculating the fitness statistics with respect to the VF2-D matcher for each set of weights and each dataset.

The simulated annealing process works well in optimizing the weights with a reasonable computational cost for the sample size. However, given that we use samples and not the whole dataset for training, the weights represent a sub-optimal solution. By testing with all the weights set to 1, we find the semi-optimized weights give a significant improvement in comparison.

In summary, from this process we effectively obtain a function which models an isomorphism matcher but with a much lower computation cost, once we have trained the weights and pre-calculated the necessary statistical values.

Empirical experiments on three well known contrasting datasets evaluate the relative effectiveness of the method with respect to the modified VF2 matcher as reference. An experimental setup (data-sets and variables used) and the results of testing for each dataset and different processing method will be now described. The objective of the empirical tests is to evaluate the performance of the matching method on three differentiated test data-sets.

The Ca-HepTh [7], Enron [8] and WikiVote [9] datasets have been used for empirical testing. These datasets offer distinct statistical characteristics and are widely used in the graph analysis literature, which allows other investigators to compare results. The Ca-HepTh and WikiVote datasets are taken directly from the Stanford Large Network Dataset Collection (SNAP) website. In the case of the Enron dataset, the mysql dump file made available by Jitesh Shetty and Jafar Adibi's on their web page was processed. The Enron email dataset [8] consists of a collection of 150 folders corresponding to the emails to and from senior management and others at Enron, collected over a period between 1998 to 2002. The total number of emails sent/received between users is approx. 1.5 million. The records were filtered so as to only include users with mutual links for which at least one email was sent and received along the link. This produced a subset of 10630 users, which were used for all the analysis in the current work. Each email sender/recipient represents a node in the graph and the activity is represented by the number of emails sent-received along the edges which connect the users. The email corpus may be considered as an extension of an online social network, useful for comparison purposes with the Ca-HepTh and WikiVote datasets.

**Figure 8** shows a summary of graph statistics for the three test datasets, where all statistics have been calculated using the Gephi software on the original datasets used. It can be noted the relatively low average clustering coefficient for the 'wikivote' dataset, and the relatively low average degree, high average path length, and high diameter for the 'hepth' dataset.

The results of the benchmarking of the distance metric D1 with respect to the "baseline" (VF2-D), and for the three test datasets, are now presented.

In **Figure 9** the difference is shown between the results using the weights assigned to 1 and the results using the weights trained using simulated annealing and the fitness function. The Enron dataset shows the greatest improvement, followed by WikiVote and Ca-HepTh.

In **Figure 10** the values are shown for the five weights trained using simulated annealing and the fitness function. We observe that the weighting is dataset dependent. For'Ca-HepTh' the highest weighting was given to $\alpha$ and $\beta$, which we recall correspond to the factors represented by 'degree of target node' and 'number of edges' in equation (1), and the lowest weighting was given to $\chi$, which corresponds to the 'clustering coefficient' factor of equation (1). However, in general, the highest weighting was given to $\alpha$ and the lowest weighting to $\delta$ (average degree of neighbours) and $\varepsilon$ (standard deviation of degrees of neighbours). The weight could therefore be interpreted as the degree of influence of the corresponding factor to the overall result.

The simulated annealing process works well for optimizing the weights with a reasonable computational cost for the sample size. Given that samples were used instead of the whole dataset for training, the weights represent a sub-optimal solution. By testing with all the weights set to 1, the semi-optimized weights give a significant improvement in comparison, as can be seen in **Figure 9.**

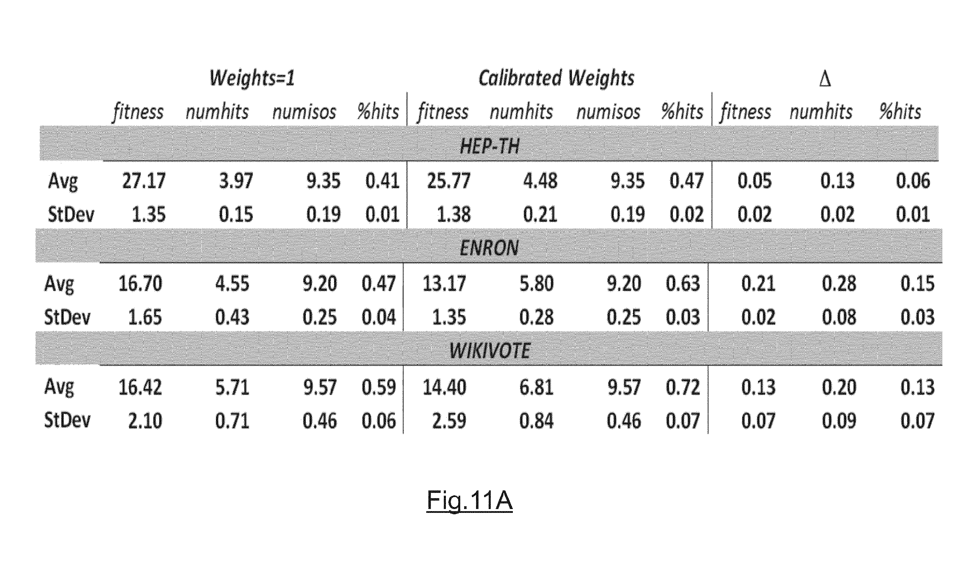

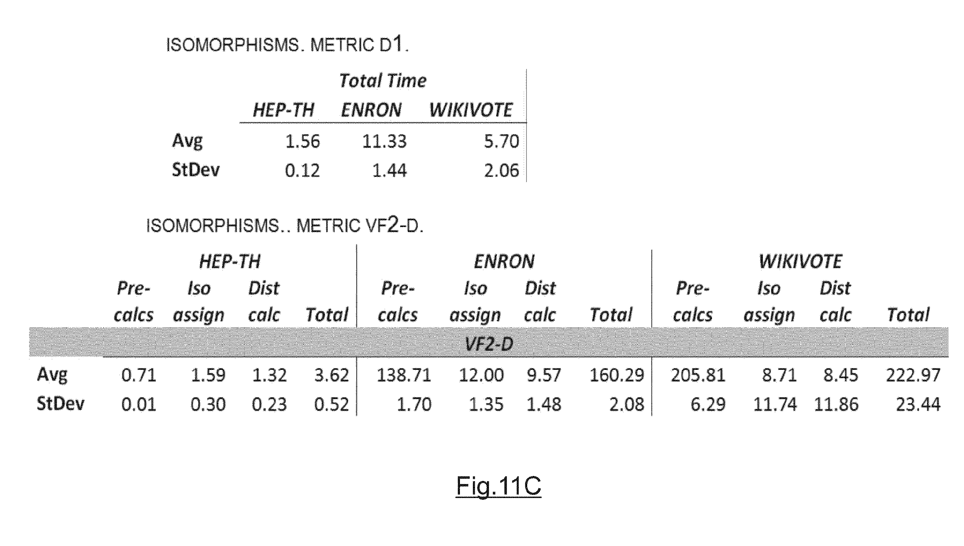

**Figures 11A, 11B and 11C** show data corresponding to the calibration (training phase), runtime (test phase) and computational cost (elapsed execution time), respectively.

In Figure 11A we see data corresponding to the calibration (training phase) for the D1 metric, performed by simulated annealing for the Ca-HepTh, Enron and Wikivote datasets. With reference to Figure 11A, column 8 (%hits, calibrated weights), by training for each dataset the accuracy is improved by over 11 % on average for the three dataset, to about 61 % for the raw fitness value. That is, approximately 61 % of the top N nodes ranked by the distance function are isomorphisms. The raw fitness value is very strict, because it requires a matching between the order of the ranking of the top N nodes, ordered by the respective distance and VF2-D values.

In Figure 11B we see data corresponding to the runtime (test phase) for the D1 and VF2-D metrics, performed by simulated annealing for the Ca-HepTh, Enron and Wikivote datasets. In terms of the sub-graph characteristics for isomorphism matching (Figure 11B, upper table), after running 10 fold tests, 100% accuracy was obtained for the target node degree value (columns labelled 'dd') and clustering coefficient (columns labelled 'cc') of the sub-graph at one hop, 95% average correlation with the neighbour degrees (columns labelled 'dd') and 93% average correlation with the number of internal edges of each neighbour (columns labelled 'di'). This measure only applies for target nodes which have at least N isomorphisms in the graph, where N is greater than zero. With reference to the lower table of Figure 11B, we see that the results for non-isomorphism matching were very similar in precision to the isomorphisms (upper table of Figure 11B). From Figure 11B (upper table) we see the high precision obtained by D1 relative to VF2-D for the following graph statistics: dd (degree of target node), di (internal degrees of neighbours in subgraph), deg (degrees of neighbours in subgraph), cc (clustering coefficient of subgraph).

Figure 11C shows data corresponding to the computational cost (elapsed execution time, in seconds) for the D1 metric and VF2-D metric for the test phase. From Figure 11C we see the significant computation cost (elapsed time) saving of the D1 metric with respect to VF2-D. For example, the total execution time of D1 for the Enron graph dataset is 11.33 seconds, whereas the total execution time of VF2-D for the same dataset is 160.29 seconds.

In summary, a function is obtained from this process which models an isomorphism matcher but which has a much lower runtime computation cost, once the weights have been trained and the necessary statistical values have been pre-calculated.

**Claims**

1. A local neighbourhood sub-graph matching method, **characterized by** comprising:

- selecting a sample S from a graph G, said sample S comprising sample nodes s;
- for each sample node s of the sample S:

• selecting the sample node s as a target node ($N_0$);
• for each node $g$ in the graph G excluding the target node ($N_0$), determining the distance between the local neighbourhood sub-graph of said node $g$ and the local neighbourhood sub-graph of the target node ($N_0$) by applying a distance metric D1 which is dependent on the sub-graph characteristics weighted according to a weight vector;
• obtaining a first list ($D_{10}$) of $n$ nodes whose local neighbourhood sub-graphs have the smallest distances D1 from the local neighbourhood sub-graph of target node ($N_0$), the list being ranked according to the distance value D1;
• obtaining a set of nodes of the graph G whose local neighbourhood sub-graphs are isomorphisms of the local neighbourhood sub-graph of the target node ($N_0$);
• for each node of said set of nodes, obtaining a distance value between the local neighbourhood sub-graph of said node and the local neighbourhood sub-graph of the target node ($N_0$) according to a distance metric VF2-D which is dependent on the difference between the degrees of the neighbours of said node and the degrees of the corresponding neighbours of the target node ($N_0$);
• obtaining a second list ($I_Z$) of said set of nodes, the list being ranked according to the distance value VF2-D;
• for all the nodes in the second list ($I_Z$) which are present in the first list ($D_{10}$), apply a fitness function to obtain a difference value $S_{diff}$ which is dependent on the difference in relative ranking between the two lists ($I_Z$,$D_{10}$);
• applying the fitness function to calculate an optimum value $S_{max}$ considering as if all the nodes in the second list ($I_Z$) were found in the first list ($D_{10}$) and in the same ranked positions;
• obtain a fitness value from the difference between the optimum value $S_{max}$ and the difference value $S_{diff}$;

- applying a training process to the weight vector using a simulated annealing process and the fitness function, in order to establish the optimum values for the weight vector, obtaining an optimum weight vector;
- executing the D1 metric with the optimum weight vector on the complete graph G in order to find, for each local neighbourhood sub-graph of each node $g$ of the graph G, the most similar local neighbourhood sub-graph among all other nodes in the complete graph G.

2. Method according to claim 1, wherein the sub-graph characteristics of the distance metric D1 comprises at least one of the following:

- degree of the target node $D_T$,
- number of edges in the sub-graph $N_E$,
- clustering coefficient CC,
- normalized average degree of adjacent nodes $AD_{AN}$, and
- normalized standard deviation of degree of adjacent nodes $SD_{AN}$.

3. Method according to claim 2, wherein the distance metric D1 between graphs $G_1$ and $G_2$ is defined as:

$$D1(G_1, G_2) = \begin{aligned} &\Delta(D_T(G_1), D_T(G_2)) \times \alpha \; + \\ &\Delta(N_E(G_1), N_E(G_2)) \times \beta \; + \\ &\Delta(CC(G_1), CC(G_2)) \times \chi \; + \\ &\Delta(AD_{AN}(G_1), AD_{AN}(G_2)) \times \delta + \\ &\Delta(SD_{AN}(G_1), SD_{AN}(G_2)) \times \varepsilon \end{aligned}$$

4. Method according to any of previous claims, wherein the distance metric VF2-D between graphs $G_1$ and $G_2$, which are isomorphisms and whose respective nodes are $N_{11}$ to $N_{1k}$ and $N_{21}$ to $N_{2k}$ excluding the respective target nodes ($N_{10}$,$N_{20}$), is defined as

$$\sqrt{\sum_{i=1}^{k}(DN_{1i}-DN_{2i})^2}$$

where $DN_{1i}$ denotes the degree of node $N_{1i}$ of graph $G_1$ and $DN_{2i}$ denotes the degree of node $N_{2i}$ of graph $G_2$.

5. Method according to any of previous claims, wherein the fitness function is defined as

$$\left(\frac{number\_of\_isomorphisms\_in\_IZ}{ranking\_in\_IZ}\right)\bigg/\left(\|ranking\_in\_IZ-ranking\_in\_D10\|+1\right)$$

6. Method according to any of previous claims, wherein the difference value $S_{diff}$ is the sum of the values of the fitness function applied to each node.

7. Method according to any of previous claims, wherein the set of nodes of the graph G whose local neighbourhood sub-graphs are isomorphisms of the local neighbourhood sub-graph of the target node ($N_0$) are obtained by applying the VF2 isomorphism matcher algorithm.

A      B      C          X      W      V

D          E          Y      Z

## Fig. 1

| Select sample S from graph G | Pre _ calculations for whole graph G | Train until optimal values found for sample S | Test on complete graph G |
|---|---|---|---|

| Simulated annealing | Fitness |
|---|---|

| Find top matches using D1 metric | Find top matches using VF2-D metric | Compare matches of D1 with those of VF2-D |
|---|---|---|

## Fig. 2

Fig. 3

Graph G$_1$

Graph G$_2$

Graph G$_3$

Graph G$_4$

Fig. 4

| | min | max | | differential values | | | | normalized differential values | | | | weights (Ca-HepTh) |
|---|---|---|---|---|---|---|---|---|---|---|---|---|
| | | | | $G_1$ | $G_2$ | $G_3$ | $G_4$ | $G_1$ | $G_2$ | $G_3$ | $G_4$ | |
| DT | 2 | 3 | | 3 | 3 | 2 | 3 | 1.00 | 1.00 | 0.00 | 1.00 | 2.04 |
| NE | 3 | 4 | | 4 | 4 | 3 | 4 | 1.00 | 1.00 | 0.00 | 1.00 | 2.90 |
| CC | 0.67 | 1 | | 0.67 | 0.67 | 1 | 0.67 | 0.00 | 0.00 | 1.00 | 0.00 | -0.51 |
| AD | 2.5 | 3.67 | | 2.67 | 3 | 2.5 | 3.67 | 0.15 | 0.43 | 0.00 | 1.00 | 0.36 |
| SD | 0.58 | 1.73 | | 1.53 | 1.73 | 0.71 | 0.58 | 0.83 | 1.00 | 0.11 | 0.00 | 0.86 |

neighbour degrees of each graph

| | $G_1$ | $G_2$ | $G_3$ | $G_4$ |
|---|---|---|---|---|
| | 4 | 4 | 3 | 4 |
| | 3 | 4 | 2 | 4 |
| | 1 | 1 | | 3 |
| avg | 2.67 | 3.00 | 2.50 | 3.67 |
| stdev | 1.53 | 1.73 | 0.71 | 0.58 |

| distances | $G_1$ | $G_2$ | $G_3$ | $G_4$ |
|---|---|---|---|---|
| $G_1$ | 0.00 | 0.25 | 5.09 | 1.02 |
| $G_2$ | 0.25 | 0.00 | 5.34 | 1.07 |
| $G_3$ | 5.09 | 5.34 | 0.00 | 4.88 |
| $G_4$ | 1.02 | 1.07 | 4.88 | 0.00 |

Fig. 5

EP 2 833 298 A1

| neighbour degrees of each graph | | | | | distances between graphs | | | |
|---|---|---|---|---|---|---|---|---|
| $G_1$ | $G_2$ | $G_4$ | | | | $G_1$ | $G_2$ | $G_4$ |
| 4 | 4 | 4 | | | $G_1$ | 0.00 | 1.00 | 2.24 |
| 3 | 4 | 4 | | | $G_2$ | 1.00 | 0.00 | 2.00 |
| 1 | 1 | 3 | | | $G_4$ | 2.24 | 2.00 | 0.00 |

## Fig. 6

$I_Z$      $D_{10}$

| Node Id | Distance (VF2-D) | Rank |
|---|---|---|
| 13 | 0.02384 | 1 |
| 22 | 0.02395 | 2 |
| 18 | 0.02395 | 2 |
| 27 | 0.03322 | 3 |
| 23 | 0.04352 | 4 |
| 21 | 0.04352 | 4 |

| Node Id | Distance (D1) | Rank |
|---|---|---|
| 13 | 0.15 | 1 |
| 27 | 0.15 | 1 |
| 18 | 0.17 | 2 |
| 22 | 0.17 | 2 |
| 11 | 0.18 | 3 |
| 5 | 0.18 | 3 |
| 25 | 0.21 | 4 |
| 26 | 0.22 | 5 |
| 19 | 0.23 | 6 |
| 21 | 0.23 | 6 |

## Fig. 7

|  | hepth | enron | wikivote |
|---|---|---|---|
| #Nodes | 9877 | 10630 | 7115 |
| #Edges | 51971 | 329674 | 103689 |
| Avg. degree | 5.259 | 31.014 | 28.324 |
| Clust. coef. | 0.471 | 0.384 | 0.141 |
| Avg. path length | 5.945 | 3.160 | 3.247 |
| Diameter | 18 | 9 | 7 |

## Fig. 8

|  | Fitness | Number of Hits | % of Hits |
|---|---|---|---|
| Ca-HepTh | +5% (27.2 → 25.7) | +13% (3.97 → 4.48) | +6% (41% → 47%) |
| Enron | +21% (16.7 → 13.2) | +28% (4.55 → 5.80) | +16% (47% → 63%) |
| WikiVote | +12% (16.4 → 14.4) | +19% (5.71 → 6.81) | +13% (59% → 72%) |

## Fig. 9

|  | Ca-HepTh | Enron | WikiVote |
|---|---|---|---|
| $\alpha$ | 2.036 | 2.819 | 3.067 |
| $\beta$ | 2.899 | 0.736 | -0.256 |
| $\chi$ | -0.513 | 1.957 | 1.332 |
| $\delta$ | 0.364 | 0.003 | 0.013 |
| $\varepsilon$ | 0.863 | -0.288 | -0.116 |

## Fig. 10

| | Weights=1 | | | | Calibrated Weights | | | | Δ | | |
|---|---|---|---|---|---|---|---|---|---|---|---|
| | *fitness* | *numhits* | *numisos* | *%hits* | *fitness* | *numhits* | *numisos* | *%hits* | *fitness* | *numhits* | *%hits* |
| *HEP-TH* | | | | | | | | | | | |
| Avg | 27.17 | 3.97 | 9.35 | 0.41 | 25.77 | 4.48 | 9.35 | 0.47 | 0.05 | 0.13 | 0.06 |
| StDev | 1.35 | 0.15 | 0.19 | 0.01 | 1.38 | 0.21 | 0.19 | 0.02 | 0.02 | 0.02 | 0.01 |
| *ENRON* | | | | | | | | | | | |
| Avg | 16.70 | 4.55 | 9.20 | 0.47 | 13.17 | 5.80 | 9.20 | 0.63 | 0.21 | 0.28 | 0.15 |
| StDev | 1.65 | 0.43 | 0.25 | 0.04 | 1.35 | 0.28 | 0.25 | 0.03 | 0.02 | 0.08 | 0.03 |
| *WIKIVOTE* | | | | | | | | | | | |
| Avg | 16.42 | 5.71 | 9.57 | 0.59 | 14.40 | 6.81 | 9.57 | 0.72 | 0.13 | 0.20 | 0.13 |
| StDev | 2.10 | 0.71 | 0.46 | 0.06 | 2.59 | 0.84 | 0.46 | 0.07 | 0.07 | 0.09 | 0.07 |

<u>Fig.11A</u>

EP 2 833 298 A1

ISOMORPHISMS.

| | HEP-TH | | | | ENRON | | | | WIKIVOTE | | | |
|---|---|---|---|---|---|---|---|---|---|---|---|---|
| | dd | di | deg | cc | dd | di | deg | cc | dd | di | deg | cc |
| **D1** | | | | | | | | | | | | |
| Avg | 0.94 | 0.97 | 1.00 | 1.00 | 0.96 | 0.97 | 1.00 | 1.00 | 0.94 | 0.84 | 1.00 | 1.00 |
| StDev | 0.03 | 0.01 | 0.00 | 0.00 | 0.01 | 0.05 | 0.00 | 0.00 | 0.03 | 0.01 | 0.00 | 0.00 |
| **VF2-D** | | | | | | | | | | | | |
| Avg | 0.98 | 0.97 | 1.00 | 1.00 | 0.97 | 0.98 | 1.00 | 1.00 | 0.96 | 0.88 | 1.00 | 1.00 |
| StDev | 0.01 | 0.03 | 0.00 | 0.00 | 0.03 | 0.01 | 0.00 | 0.00 | 0.03 | 0.07 | 0.00 | 0.00 |
| **RANDOM** | | | | | | | | | | | | |
| Avg | 0.51* | 0.53 | -0.01 | 0.15 | 0.44 | 0.63 | 0.06 | 0.06 | 0.64 | 0.45 | -0.02 | 0.13 |
| StDev | 0.28 | 0.33 | 0.37 | 0.29 | 0.53 | 0.38 | 0.39 | 0.33 | 0.50 | 0.53 | 0.29 | 0.39 |

NON-ISOMORPHISMS.

| | HEP-TH | | | | ENRON | | | | WIKIVOTE | | | |
|---|---|---|---|---|---|---|---|---|---|---|---|---|
| | dd | di | deg | cc | dd | di | deg | cc | dd | di | deg | cc |
| **D1** | | | | | | | | | | | | |
| Avg | 0.93 | 0.98 | 1.00 | 1.00 | 0.90 | 0.98 | 1.00 | 1.00 | 0.91 | 0.96 | 0.99 | 1.00 |
| StDev | 0.01 | 0.03 | 0.00 | 0.00 | 0.01 | 0.01 | 0.00 | 0.00 | 0.00 | 0.01 | 0.02 | 0.00 |
| **RANDOM** | | | | | | | | | | | | |
| Avg | -0.22* | -0.23 | 0.05 | -0.07 | -0.07 | -0.01 | -0.15 | 0.14 | -0.20 | -0.03 | -0.14 | 0.02 |
| StDev | 0.24 | 0.22 | 0.26 | 0.26 | 0.27 | 0.39 | 0.33 | 0.39 | 0.46 | 0.45 | 0.29 | 0.40 |

Fig.11B

ISOMORPHISMS. METRIC D1.

|        | Total Time | | |
|--------|--------|--------|----------|
|        | HEP-TH | ENRON | WIKIVOTE |
| Avg    | 1.56   | 11.33 | 5.70     |
| StDev  | 0.12   | 1.44  | 2.06     |

ISOMORPHISMS.. METRIC VF2-D.

|       | HEP-TH | | | | ENRON | | | | WIKIVOTE | | | |
|-------|--------|--------|------|-------|--------|--------|------|--------|--------|--------|-------|--------|
|       | Pre-calcs | Iso assign | Dist calc | Total | Pre-calcs | Iso assign | Dist calc | Total | Pre-calcs | Iso assign | Dist calc | Total |
| VF2-D | | | | | | | | | | | | |
| Avg   | 0.71 | 1.59 | 1.32 | 3.62 | 138.71 | 12.00 | 9.57 | 160.29 | 205.81 | 8.71 | 8.45 | 222.97 |
| StDev | 0.01 | 0.30 | 0.23 | 0.52 | 1.70 | 1.35 | 1.48 | 2.08 | 6.29 | 11.74 | 11.86 | 23.44 |

Fig.11C

EP 2 833 298 A1

## EUROPEAN SEARCH REPORT

Application Number

EP 13 38 2308

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Jinsoo Lee ET AL: "An In-depth Comparison of Subgraph Isomorphism Algorithms in Graph Databases", Proceedings of the VLDB Endowment vol 6 no 2, 31 December 2012 (2012-12-31), XP055094835, Retrieved from the Internet: URL:http://www.vldb.org/pvldb/vol6/p133-han.pdf [retrieved on 2014-01-06] * the whole document * | 1-7 | INV. G06N5/00 |
| | ----- | | |
| A,D | L P Cordella ET AL: "An Improved Algorithm for Matching Large Graphs", PROC. 3RD IAPR-TC-15 INTERNATIONAL WORKSHOP ON GRAPH BASED REPRESENTATIONS, 31 December 2001 (2001-12-31), XP055094839, Retrieved from the Internet: URL:http://pdf.aminer.org/000/348/645/efficient_algorithms_for_matching_attributed_graphs_and_function_described_graphs.pdf [retrieved on 2014-01-06] * the whole document * | 1-7 | |
| | ----- | | TECHNICAL FIELDS SEARCHED (IPC) |
| | -/-- | | G06N |

The present search report has been drawn up for all claims

| Place of search | Date of completion of the search | Examiner |
|---|---|---|
| The Hague | 6 January 2014 | Valencia, Erika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 833 298 A1**

Europäisches
Patentamt
European
Patent Office
Office européen
des brevets

# EUROPEAN SEARCH REPORT

Application Number

EP 13 38 2308

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | S Umeyama: "An eigendecomposition approach to weighted graph matching problems", IEEE Transactions on Pattern Analysis and Machine Intelligence, 31 January 1988 (1988-01-31), pages 695-703, XP055094856, DOI: 10.1109/34.6778 Retrieved from the Internet: URL:http://ieeexplore.ieee.org/xpls/abs_al l.jsp?arnumber=6778 [retrieved on 2014-01-06] * the whole document * | 1-7 | |
| A,D | YUANYUAN TIAN ET AL: "TALE: A Tool for Approximate Large Graph Matching", DATA ENGINEERING, 2008. ICDE 2008. IEEE 24TH INTERNATIONAL CONFERENCE ON, IEEE, PISCATAWAY, NJ, USA, 7 April 2008 (2008-04-07), pages 963-972, XP031246054, ISBN: 978-1-4244-1836-7 * the whole document * | 1-7 | |
| A,D | MESSMER B T ET AL: "ERROR-CORRECTING GRAPH ISOMORPHISM USING DECISION TREES", INTERNATIONAL JOURNAL OF PATTERN RECOGNITION AND ARTIFICIAL INTELLIGENCE (IJPRAI), WORLD SCIENTIFIC PUBLISHING, SI, vol. 12, no. 6, 30 September 1998 (1998-09-30), pages 721-742, XP000781898, ISSN: 0218-0014, DOI: 10.1142/S0218001498000415 * the whole document * | 1-7 | TECHNICAL FIELDS SEARCHED (IPC) |

-/--

The present search report has been drawn up for all claims

| Place of search | Date of completion of the search | Examiner |
|---|---|---|
| The Hague | 6 January 2014 | Valencia, Erika |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 13 38 2308

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | Brendan D. Mckay: "Practical graph Isomorphism", Congressum Numerantium, 31 December 1981 (1981-12-31), pages 45-87, XP055094791, Retrieved from the Internet: URL:http://cs.anu.edu.au/~bdm/papers/pgi.pdf [retrieved on 2014-01-06] * the whole document * | 1-7 | |

TECHNICAL FIELDS
SEARCHED        (IPC)

The present search report has been drawn up for all claims

| Place of search | Date of completion of the search | Examiner |
|---|---|---|
| The Hague | 6 January 2014 | Valencia, Erika |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

# EP 2 833 298 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **B. D. MCKAY.** Practical graph isomorphism. *Congressus Numerantium,* 1981, vol. 30, 45-87
- **L. P. CORDELLA ; P. FOGGIA ; C. SANSONE ; M.VENTO.** An Improved Algorithm for Matching Large Graphs. *Proc. 3rd IAPR-TC-15 International Workshop on Graph based Representations, Cuen, Italy,* 2001, 149-159
- **H. BUNKE.** Error correcting graph matching: on the influence of the underlying cost function. *IEEE Trans. Patt. Anal. Mach. Intell.,* 1999, vol. 21, 917-922
- **S. UMEYAMA.** An eigendecomposition approach to weighted graph matching problems. *IEEE Trans. Patt. Anal. Mach. Intell.,* 1988, vol. 10, 695-703
- **DANIA KOUTRA ; JOSHUA T. VOGELSTEIN ; CHRISTOS FALOUTSOS.** DeltaCon: a principled massive-graph similarity function. *SDM 2013,* May 2013
- TALE: A Tool for Approximate Large Graph Matching. **YUANYUAN TIAN ; JIGNESH M. PATEL.** ICDE '08 Proceedings of the 2008 IEEE 24th International Conference on Data Engineering. IEEE Computer Society, 2008, 963-972
- Graph Evolution: Densification and Shrinking Diameters. **J. LESKOVEC ; J. KLEINBERG ; C. FALOUTSOS.** ACM Transactions on Knowledge Discovery from Data. ACM, 2007
- **J. SHETTY ; J. ADIBI.** Discovering Important Nodes through Graph Entropy - The Case of Enron Email Database. *KDD '2005, Chicago,* 2005
- Signed Networks in Social Media. **J. LESKOVEC ; D. HUTTENLOCHER ; J. KLEINBERG.** CHI '10 Proc. 28th Int. Conf. on Human Factors in Computing Systems. ACM, 2010, 1361-1370
- **B.D. MCKAY.** Practical graph isomorphism. *Congressus Numerantium,* 1981, vol. 30, 45-87